# EUROPÄISCHE PATENTSCHRIFT

(11) **EP 3 161 410 B1**
(45) Veröffentlichungstag und Bekanntmachung des Hinweises auf die Patenterteilung: **27.06.2018**
(21) Anmeldenummer: 15747368.7
(22) Anmeldetag: 03.06.2015
(51) Int. Cl.: G01B 11/06, G01N 21/952, G01N 21/3586

(54) **MESSVORRICHTUNG UND VERFAHREN ZUR VERMESSUNG VON PRÜFOBJEKTEN**
MEASURING DEVICE AND METHOD OF MEASURING OBJECTS TO BE CONTROLLED
DISPOSITIF DE MESURE ET PROCÉDÉ DE MESURE D'OBJETS À CONTRÔLER

(30) Priorität: 30.06.2014 DE 102014212633
(43) Veröffentlichungstag der Anmeldung: 03.05.2017
(73) Patentinhaber: iNOEX GmbH Innovationen und Ausrüstungen für die Extrusionstechnik, 49324 Melle (DE)
(72) Erfinder: HOCHREIN, Thomas, 97222 Rimpar (DE)
(74) Vertreter: Bremer, Ulrich
(86) Internationale Anmeldenummer: PCT/DE2015/100222
(87) Internationale Veröffentlichungsnummer: WO 2016/000680

(56) Entgegenhaltungen:
- JP-A- 2002 292 832
- US-A1- 2007 195 921
- US-A1- 2010 195 090
- US-A1- 2013 334 421
- STOIK C ET AL: "Nondestructive evaluation of aircraft composites using reflective terahertz time domain spectroscopy", NDT & E INTERNATIONAL, BUTTERWORTH-HEINEMANN, OXFORD, GB, Bd. 43, Nr. 2, 1. März 2010 (2010-03-01), Seiten 106-115, XP026833882, ISSN: 0963-8695 [gefunden am 2009-09-30]

## Beschreibung

Die Erfindung betrifft eine Messvorrichtung und ein Verfahren zur Vermessung von Prüfobjekten, insbesondere im Terahertz-Frequenzbereich. Die zu vermessenden Prüfobjekte weisen insbesondere zumindest abschnittsweise mindestens eine hohlzylinderförmige Materialschicht auf.

Aus der DE 10 2008 046 988 A1 ist ein Reflektometer zur Charakterisierung von Materialien hinsichtlich wenigstens einer optischen Reflexionseigenschaft bekannt. Das Reflektometer umfasst einen Ellipsoidspiegel, in dessen ersten Brennpunkt eine zu charakterisierende Probe mittels eines Probenhalters gehalten wird. Die Probe ist mittels des Probenhalters um eine Drehachse drehbar. Die Bestrahlung der Probe erfolgt durch eine Öffnung im Ellipsoidspiegel mittels einer Strahlungsquelle. Der Ellipsoidspiegel bildet die von der im ersten Brennpunkt beleuchteten Probe reflektierten Strahlung durch eine im zweiten Brennpunkt positionierte Blende auf einen dahinter liegenden Detektor ab. Die Messdaten des Reflektometers werden anschließend zur Charakterisierung der Probe ausgewertet.

Aus Stoik C et al: "Nondestructive evaluation of aircraft composistes using reflective terahertz time domain spectroscopy", NDT & E International, Butterworth-Heinemann, Oxford, GB, Bd. 43, Nr. 2, 1. März, Seiten 106-115, XP026833882, ISSN: 0963-8695, ist eine nicht-zerstörende Überprüfung von Kunststoff-Teilen mittels Terahertz-Strahlung bekannt, bei der Terahertz-Strahlung von einem Terahertz-Emitter ausgegeben und über mehrere parabolische Spiegel auf die zu untersuchende Probe, z. B. einen Außenbereich eines Flugzeugs gelenkt wird. Die von der Probe dann reflektierte Strahlung wird über Spiegel, einen Strahlteiler und einen Detektions-Kristall gemessen.

Aus US 2007/195921 A1 ist eine Vorrichtung zum Ermitteln von Informationen über ein Objekt unter Verwendung von THz-Strahlung bekannt, bei dem die von einem Sender ausgehende Strahlung über parabolische Spiegel und Linsen auf ein Objekt geleitet und nachfolgend detektiert wird.

Die US 2013/334421 A1 beschreibt eine Mess-Vorrichtung, bei der elektromagnetische Strahlung auf ein Objekt konvergiert wird und die vom Objekt abgegebenen Strahlen detektiert werden. Die Strahlung ist hierbei THz-Strahlung.

Aus US 2010/195090 A1 ist eine berührungslose Vermessung von Objekten bekannt, bei der Strahlung über Linsen und parabolische Spiegel auf ein Objekt gelenkt und die hiervon reflektierte Strahlung aufgefangen und detektiert wird.

Der Erfindung liegt die Aufgabe zugrunde, eine Messvorrichtung zu schaffen, die in einfacher und flexibler Weise die Vermessung von Prüfobjekten ermöglicht. Die Messvorrichtung soll insbesondere die Vermessung von Prüfobjekten ermöglichen, die zumindest abschnittsweise mindestens eine hohlzylinderförmige Materialschicht aufweisen.

Diese Aufgabe wird durch eine Messvorrichtung mit den Merkmalen des Anspruchs 1 gelöst. Die Messvorrichtung bzw. Reflexions-Messvorrichtung dient zur Durchführung von Reflexionsmessungen an dem zu vermessenden Prüfobjekt. Die Vermessung des Prüfobjekts erfolgt also mittels Reflexionsmessungen. Der erste Spiegel der mindestens einen Spiegel-Anordnung ist parabelförmig gekrümmt bzw. im Querschnitt parabelförmig gekrümmt und bildet in einer x-y-Ebene einen ersten Brennpunkt aus. Der zweite Spiegel der mindestens einen Spiegel-Anordnung ist parabelförmig gekrümmt bzw. im Querschnitt parabelförmig gekrümmt und bildet in der x-y-Ebene einen zweiten Brennpunkt aus. Der erste und zweite Spiegel sind vorzugsweise bezüglich einer y-z-Ebene einander gegenüberliegend angeordnet. Die y-z-Ebene verläuft senkrecht zu der x-y-Ebene.

Im ersten Brennpunkt ist ein dritter Spiegel angeordnet, der durch den ersten Brennpunkt verläuft und relativ zu der x-y-Ebene geneigt angeordnet ist, also mit dieser einen Winkel ungleich 0° einschließt.

Das zu vermessende Prüfobjekt ist mittels des Prüfobjekthalters im zweiten Brennpunkt angeordnet.

Die mindestens eine Sender-Empfänger-Einheit ist außerhalb der x-y-Ebene, also in einer z-Richtung beabstandet von der x-y-Ebene, angeordnet. Dies ist aufgrund der Umlenkung mittels des dritten Spiegels möglich. Der dritte Spiegel schließt mit der x-y-Ebene einen Winkel α ein, wobei für α gilt: 30° ≤ α ≤ 60°, insbesondere 35° ≤ α ≤ 55°, und insbesondere 40° ≤ α ≤ 50°. Vorzugsweise beträgt der Winkel α = 45°.

Zum Vermessen des Prüfobjekts wird von dem Sender der Sender-Empfänger-Einheit zunächst Strahlung in Richtung des dritten Spiegels emittiert. Die emittierte Strahlung wird mittels des dritten Spiegels in die x-y-Ebene umgelenkt und trifft anschließend auf den ersten Spiegel. Die Strahlung wird dann von dem ersten Spiegel umgelenkt und trifft aufgrund dessen parabelförmigen Krümmung anschließend auf den zweiten Spiegel. Durch die parabelförmige Krümmung des zweiten Spiegels wird die Strahlung von dem zweiten Spiegel in Richtung des zweiten Brennpunkts reflektiert. Aufgrund der Anordnung des Prüfobjekts im zweiten Brennpunkt trifft die Strahlung auf das Prüfobjekt und wird von dort wiederum reflektiert. Das Prüfobjekt ist vorzugsweise derart angeordnet, dass eine Mittellängsachse des Prüfobjekts durch den zweiten Brennpunkt verläuft, so dass die Strahlung bzw. der Strahl radial auf das Prüfobjekt trifft und der Einfallswinkel der Strahlung dem Reflexionswinkel entspricht.

Die am Prüfobjekt reflektierte Strahlung weist denselben Strahlengang, jedoch in entgegengesetzter Richtung, auf, wie die einfallende Strahlung. Die reflektierte Strahlung wird von dem zweiten Spiegel aufgrund der parabelförmigen Krümmung auf den ersten Spiegel reflektiert, der die Strahlung in Richtung des ersten Brennpunkts reflektiert, wo diese auf den dritten Spiegel trifft. Der dritte Spiegel lenkt die reflektierte Strahlung quer, insbesondere senkrecht, zu der x-y-Ebene in Richtung der Sender-Empfänger-Einheit um. Der Empfänger detektiert die reflektierte Strahlung und leitet die Messwerte an die Steuereinheit weiter, die die detektierte Strahlung bzw. die Messwerte auswertet.

Vorzugsweise sind der erste Spiegel und der zweite Spiegel unbeweglich zueinander angeordnet.

Der erste Spiegel und der zweite Spiegel begrenzen vorzugsweise zusammen einen Innenraum.

Die erfindungsgemäße Messvorrichtung ist vergleichsweise einfach aufgebaut, da die mindestens eine Sender-Empfänger-Einheit aufgrund der zugehörigen Spiegel-Anordnung außerhalb, also in der z-Richtung beabstandet zu der x-y-Ebene positionierbar ist. Aufgrund der Anordnung des Prüfobjekts im zweiten Brennpunkt mittels des Prüfobjekthalters und des dritten Spiegels im ersten Brennpunkt kann das Prüfobjekt in flexibler Weise vermessen werden. Beispielsweise kann durch ein Verschwenken bzw. Drehen des dritten Spiegels um den ersten Brennpunkt und/oder durch ein Verschwenken bzw. Drehen des Prüfobjekts um den zweiten Brennpunkt ein weiter Umfangsbereich des Prüfobjekts mit nur einer Sender-Empfänger-Einheit vermessen werden. Beispielsweise ist die Vermessung einer Dicke mindestens einer hohlzylinderförmigen Materialschicht über den gesamten Umfang möglich.

Vorzugsweise ist der dritte Spiegel um eine parallel zu der z-Richtung durch den ersten Brennpunkt verlaufende z-Achse verschwenkbar. Eine solche Messvorrichtung gewährleistet eine annähernd vollumfängliche Vermessung des Prüfobjekts. Dies gilt insbesondere, wenn das Prüfobjekt selbst nicht um den zweiten Brennpunkt schwenkbar bzw. drehbar ist, beispielsweise wenn die Vermessung inline im Herstellungsprozess erfolgt. Durch das Verschwenken des dritten Spiegels um die z-Achse trifft die emittierte Strahlung in unterschiedlichen Winkeln auf den ersten Spiegel, der die Strahlung auf unterschiedliche Reflexionsstellen auf den zweiten Spiegel umlenkt. Der zweite Spiegel - ausgehend von unterschiedlichen Reflexionsstellen - reflektiert die Strahlung in Richtung des zweiten Brennpunkts. Die Strahlung trifft somit an unterschiedlichen Stellen auf die Oberfläche des Prüfobjekts, wodurch das Prüfobjekt in einem weiten Umfangsbereich vermessen wird bzw. vermessbar ist. Mit Ausnahme des von dem Prüfobjekt selbst abgeschatteten Bereichs ist somit eine annähernd vollumfängliche Vermessung des Prüfobjekts möglich. Für eine vollumfängliche Vermessung des Prüfobjekts ist insbesondere eine zweite Spiegel-Anordnung vorgesehen, wobei der jeweilige dritte Spiegel um eine zugehörige z-Achse durch den jeweiligen ersten Brennpunkt verschwenkbar ist.

Vorzugsweise ist der Prüfobjekthalter derart ausgebildet, dass das Prüfobjekt um eine durch den zweiten Brennpunkt verlaufende Drehachse verschwenkbar ist. Eine solche Messvorrichtung gewährleistet auf einfache Weise eine vollumfängliche Vermessung des Prüfobjekts. Der dritte Spiegel kann relativ zu dem ersten und/oder zweiten Spiegel fest angeordnet sein, sodass die vollumfängliche Vermessung ausschließlich durch das Verschwenken bzw. Drehen des Prüfobjekts erfolgt. Weiterhin kann der dritte Spiegel um eine parallel zu der z-Richtung durch den ersten Brennpunkt verlaufende z-Achse verschwenkbar sein, sodass der Prüfobjekthalter lediglich derart verschwenkbar sein muss, dass der durch das Verschwenken des dritten Spiegels nicht erreichbare, abgeschattete Bereich des Prüfobjekts durch Verschwenken des Prüfobjekts vermessbar wird.

Das Prüfobjekt ist insbesondere hohlzylinderförmig ausgebildet, also als Rohr mit einem kreisförmigen Querschnitt. Das Prüfobjekt ist insbesondere aus Kunststoff ausgebildet. Das Prüfobjekt weist insbesondere eine hohlzylinderförmige Materialschicht oder mehrere hohlzylinderförmige Materialschichten auf.

Die mindestens eine Sender-Empfänger-Einheit ist vorzugsweise derart ausgebildet, dass elektromagnetische Strahlung mit einer Frequenz im Bereich von 0,01 THz bis 50 THz, insbesondere von 0,05 THz bis 20 THz, und insbesondere von 0,1 THz bis 10 THz emittierbar bzw. detektierbar ist. Hierdurch wird insbesondere die Vermessung von Prüfobjekten aus Kunststoff ermöglicht. Die Vermessung des Prüfobjekts mittels der Strahlung bzw. THz-Strahlung basiert auf der Messung einer Laufzeitdifferenz der Strahlung, die an den Grenzschichten reflektiert wird. Grenzschichten sind die Oberflächen des Prüfobjekts, beispielsweise die Rohraußenwand und die Rohrinnenwand, und aneinandergrenzende Materialschichten innerhalb des Prüfobjekts. Die mindestens eine Sender-Empfänger-Einheit ist insbesondere derart ausgebildet, dass THz-Pulse emittierbar bzw. detektierbar sind.

Vorzugsweise ist die mindestens eine Sender-Empfänger-Einheit entlang einer parallel zu der z-Richtung durch den ersten Brennpunkt verlaufenden z-Achse angeordnet. Eine solche Messvorrichtung gewährleistet in einfacher Weise eine Vermessung des Prüfobjekts. Dadurch, dass die mindestens eine Sender-Empfänger-Einheit entlang der z-Achse, also senkrecht beabstandet von der x-y-Ebene angeordnet ist, wird der von dem ersten und zweiten Spiegel begrenzte Raum bzw. Innenraum nicht unnötigerweise von der Sender-Empfänger-Einheit beeinträchtigt, wobei in einfacher Weise eine Umlenkung der Strahlung erfolgt. Der dritte Spiegel benötigt einen vergleichsweise geringen Platzbedarf, sodass die Spiegel-Anordnung vergleichsweise kompakt aufgebaut ist. Die Größe der Spiegel-Anordnung wird lediglich durch die Größe des größten zu vermessenden Prüfobjekts bestimmt. Die z-Achse verläuft senkrecht zu der x-y-Ebene. Entsprechend ist der dritte Spiegel zur Umlenkung der Strahlung um 45° zu der x-y-Ebene geneigt.

Weitere vorteilhafte Ausgestaltungen der Erfindung sind in den Unteransprüchen angegeben.

Die Ausgestaltung gemäß dem Anspruch 4 führt zu einem einfachen Aufbau der Messvorrichtung.

Die Messvorrichtung gemäß dem Anspruch 5 ist wieder besonders einfach aufgebaut. Die erste Öffnung des ersten Spiegels befindet sich vorzugsweise gegenüberliegend zu dem Scheitelpunkt bzw. Grund des ersten Spiegels, während sich die zweite Öffnung des zweiten Spiegels günstigerweise gegenüberliegend zu dem Scheitelpunkt bzw. Grund des zweiten Spiegels befindet. Die Öffnungen der beiden Spiegel sind vorzugsweise benachbart zueinander angeordnet.

Insbesondere sind der erste und zweite Spiegel der Messvorrichtung gemäß dem Anspruch 4 bezüglich einer y-z-Ebene spiegelsymmetrisch zueinander. Die y-z-Ebene verläuft, vorzugsweise vertikal, zwischen den beiden Spiegeln.

Die Messvorrichtung gemäß dem Anspruch 7 ist äußerst einfach ausgebildet. Der erste und zweite Spiegel sind vorzugsweise zu einer y-z-Ebene beabstandet zueinander angeordnet, die sich zwischen diesen erstreckt. Günstigerweise sind der erste Spiegel und der zweite Spiegel separat ausgeführt. Alternativ sind der erste Spiegel und der zweite Spiegel direkt oder indirekt miteinander verbunden.

Die Messvorrichtung gemäß dem Anspruch 8 gewährleistet in einfacher Weise eine exakte Vermessung des Prüfobjekts. Die emittierte Strahlung weist in der x-y-Ebene eine Strahldivergenz auf. Die Größe des Messbereichs hängt von der Parabelgeometrie des ersten und/oder zweiten Spiegels ab.

Gemäß Anspruch 9 lenkt der dritte Spiegel die von dem Sender emittierte Strahlung auf den ersten Spiegel und der erste Spiegel die Strahlung auf den zweiten Spiegel um, wobei der zweite Spiegel die Strahlung auf den zweiten Brennpunkt bzw. das Prüfobjekt umlenkt. Umgekehrt gilt vorzugsweise analog, dass der zweite Spiegel die am Prüfobjekt reflektierte Strahlung auf den ersten Spiegel umlenkt, wobei der erste Spiegel die Strahlung auf den dritten Spiegel umlenkt.

Gemäß Anspruch 10 lenkt der erste Spiegel die in unterschiedlichen Winkeln auftreffende Strahlung derart auf den zweiten Spiegel um, dass die Strahlung dann zwischen dem ersten Spiegel und dem zweiten Spiegel stets parallel, aber beabstandet zueinander verläuft. Vorzugsweise gilt auch, dass der zweite Spiegel die in unterschiedlichen Winkeln auftreffende Strahlung derart auf den ersten Spiegel umlenkt, dass die Strahlung dann zwischen dem zweiten Spiegel und dem ersten Spiegel stets parallel, aber beabstandet zueinander verläuft. Trotz unterschiedlicher Reflexionsstellen an dem ersten und zweiten Spiegel wird die Strahlung stets in den jeweiligen Brennpunkt von dem ersten bzw. zweiten Spiegel umgelenkt bzw. reflektiert.

Eine Messvorrichtung nach Anspruch 11 gewährleistet eine voll umfängliche Vermessung des Prüfobjekts. An einer dem dritten Spiegel abgewandten Seite des Prüfobjekts ist ein Bereich des Prüfobjekts aufgrund der Raumausdehnung des Prüfobjekts selbst abgeschattet, sodass dieser Bereich mittels der ersten Spiegel-Anordnung nicht vermessbar ist. Der abgeschattete Bereich wird mittels der zweiten Spiegel-Anordnung vermessen, die in der z-Richtung versetzt zu der ersten Spiegel-Anordnung angeordnet ist. Bei einer geeigneten Anordnung von genau zwei Spiegel-Anordnungen kann das Prüfobjekt voll umfänglich vermessen werden, jedoch können auch mehr als zwei Spiegel-Anordnungen vorgesehen sein, wenn dies vorteilhaft ist. Die Spiegel-Anordnungen sind derart zueinander ausgerichtet, dass der abgeschattete Bereich, der von der ersten Spiegel-Anordnung nicht vermessbar ist, mittels der zweiten Spiegel-Anordnung vermessbar ist und umgekehrt. Vorzugsweise sind die mindestens zwei Spiegel-Anordnungen identisch aufgebaut. Das Vorsehen mehrerer Spiegel-Anordnungen ist insbesondere dann vorteilhaft, wenn das Prüfobjekt nicht um den jeweiligen zweiten Brennpunkt schwenkbar bzw. drehbar ist, beispielsweise wenn die Vermessung des Prüfobjekts inline im Herstellungsprozess erfolgt.

Eine Messvorrichtung nach Anspruch 12 gewährleistet eine voll umfängliche Vermessung des Prüfobjekts mittels der zwei Spiegel-Anordnungen. Durch die Ausrichtung der zwei Spiegel-Anordnungen wird gewährleistet, dass mittels der einen Spiegel-Anordnung der abgeschattete Bereich des Prüfobjekts vermessbar ist, der von der jeweils anderen Spiegel-Anordnung nicht vermessbar ist. Der erste Brennpunkt und der zweite Brennpunkt der ersten Spiegel-Anordnung liegen vorzugsweise in einer ersten Ebene, während der erste Brennpunkt und der zweite Brennpunkt der zweiten Spiegel-Anordnung günstigerweise in einer zu der ersten Ebene senkrecht verlaufenden zweiten Ebene liegen. Bei der ersten Ebene handelt es sich vorzugsweise um die x-z-Ebene, während die zweite Ebene vorzugsweise die y-z-Ebene ist. Vorzugsweise sind der erste Spiegel und der zweite Spiegel der ersten Spiegel-Anordnung und der erste Spiegel und der zweite Spiegel der zweiten Spiegel-Anordnung unter Vergrößerung des durch diese jeweils begrenzten Raums bzw. Innenraums beabstandet zueinander angeordnet.

Eine Anordnung der jeweiligen zweiten Brennpunkte auf einer parallel zu der z-Richtung verlaufenden Geraden gewährleistet eine vollumfängliche Vermessung des Prüfobjekts. Eine Mittellängsachse des Prüfobjekts ist deckungsgleich mit der Geraden durch die zweiten Brennpunkte, sodass die Strahlung bei den mindestens zwei Spiegel-Anordnungen jeweils radial auf das Prüfobjekt bzw. eine Oberfläche des Prüfobjekts trifft.

Gemäß Anspruch 13 sind die ersten Brennpunkte der beiden Spiegel-Anordnungen um eine Gerade bzw. Achse, auf der die zweiten Brennpunkte liegen, um 90° versetzt bzw. verdreht zueinander angeordnet.

Eine Messvorrichtung nach Anspruch 14 gewährleistet eine einfache und schnelle Vermessung des Prüfobjekts. Dadurch, dass jeder Spiegel-Anordnung eine eigene Sender-Empfänger-Einheit zugeordnet ist, kann mittels der mindestens zwei Spiegel-Anordnungen das Prüfobjekt gleichzeitig vermessen werden. Insbesondere weist die Messvorrichtung genau zwei Spiegel-Anordnungen und genau zwei zugehörige Sender-Empfänger-Einheiten auf.

Eine Messvorrichtung nach Anspruch 15 gewährleistet in einfacher Weise eine exakte Vermessung des Prüfobjekts. Die emittierte und von dem dritten Spiegel umgelenkte Strahlung weist senkrecht zu der x-y-Ebene eine Strahldivergenz auf. Durch die gekrümmte Ausbildung des ersten und zweiten Spiegels in der z-Richtung wird die an dem ersten bzw. zweiten Spiegel reflektierte Strahlung, je nach Krümmung des ersten bzw. zweiten Spiegels, fokussiert oder zumindest kollimiert. Hierdurch wird gewährleistet, dass die an dem Prüfobjekt reflektierte Strahlung den Strahlengang genau in entgegengesetzter Richtung wieder durchläuft und somit detektierbar ist.

Sind der erste und zweite Spiegel in der z-Richtung zusammen parabolisch gekrümmt und fällt der erste Brennpunkt, insbesondere bei allen Drehwinkeln des dritten Spiegels, mit dem Brennpunkt der Parabel bzw. der parabelförmigen Krümmung zusammen, so wird die an dem ersten bzw. zweiten Spiegel reflektierte Strahlung in z-Richtung kollimiert. Alle Teilstrahlen des Strahls bzw. der Strahlung fallen unabhängig vom Radius des Prüfobjekts immer senkrecht auf das Prüfobjekt ein. Die Ausdehnung des Messbereichs in der z-Richtung ist der Durchmesser des kollimierten Strahls, der durch den Divergenzwinkel und den Abstand zwischen dem dritten und dem ersten bzw. zweiten Spiegel entlang des zurückgelegten Strahlengangs gegeben ist.

Sind der erste und zweite Spiegel in der z-Richtung zusammen elliptisch gekrümmt, wobei der erste Brennpunkt des ersten Spiegels in der x-y-Ebene, insbesondere bei allen Drehwinkeln des dritten Spiegels, mit dem ersten Brennpunkt der in der z-Richtung ausgeformten Ellipse bzw. elliptischen Krümmung zusammenfällt, so wird die reflektierte Strahlung in einen zweiten Brennpunkt fokussiert, der auf der Oberfläche des Prüfobjekts liegt. Die Ausdehnung des Messbereichs in der z-Richtung ist aufgrund der Fokussierung somit optimiert.

Weiterhin kann der erste und zweite Spiegel als Freiformfläche in der z-Richtung gekrümmt und dahingehend optimiert sein, dass für einen vordefinierten Bereich des Radius des Prüfobjekts ein Messbereich bzw. Messpunkt mit gewünschter Fokusgröße erzielt wird.

Eine Messvorrichtung nach Anspruch 16 gewährleistet auf einfache Weise eine exakte Vermessung des Prüfobjekts. Die Strahlung bzw. der Strahl wird auf das Prüfobjekt fokussiert, indem der erste und zweite Spiegel in der z-Richtung plan ausgebildet ist und ein Fokussier-Element eingesetzt wird, das die Strahlausbreitung senkrecht zu der x-y-Ebene beeinflusst und die Strahlung bzw. den Strahl in der z-Richtung fokussiert. Beispielsweise kann der dritte Spiegel gekrümmt ausgebildet sein, sodass dieser zusätzlich als Fokussier-Element wirkt und die Strahlung in der z-Richtung fokussiert. Weiterhin kann das Fokussier-Element als Linse ausgebildet sein, die im Strahlengang zwischen der Sender-Empfänger-Einheit und dem zugehörigen dritten Spiegel angeordnet ist und die Strahlausbreitung in z-Richtung beeinflusst, also die Strahlung in der z-Richtung fokussiert. Das Fokussier-Element ist insbesondere zusammen mit dem dritten Spiegel um die z-Achse drehbar.

Beispielsweise wird die einfallende kollimierte Strahlung mit einem als zylindrische Linse ausgebildetem Fokussier-Element auf den im ersten Brennpunkt angeordneten dritten Spiegel fokussiert. Das Fokussier-Element und der dritte Spiegel rotieren vorzugsweise gemeinsam und sind derart zueinander angeordnet, dass die divergierende Ebene des Strahls bzw. der Strahlung nach dem dritten Spiegel in der x-y-Ebene liegt. Ein zweites als zylindrische Linse ausgebildetes Fokussier-Element ist senkrecht zu der ersten Linse angeordnet und wird ebenfalls im Strahlengang vor dem dritten Spiegel positioniert und ist entsprechend der ersten Linse zusammen mit dem dritten Spiegel rotierbar. Durch die zweite Linse wird die Strahlung von dem dritten Spiegel in der y-Richtung und nach dem dritten Spiegel in der z-Richtung fokussiert.

Der Abstand der zweiten Linse bis zur Oberfläche des Prüfobjekts entspricht deren Brennweite. Durch eine Änderung der Linsenposition der zweiten Linse entlang der z-Achse ist der Messfokus in z-Richtung auf Prüfobjekte mit unterschiedlichem Radius anpassbar.

Der Erfindung liegt ferner die Aufgabe zugrunde, ein Verfahren zu schaffen, das in einfacher und flexibler Weise die Vermessung von Prüfobjekten ermöglicht. Das Verfahren soll insbesondere die Vermessung von Prüfobjekten ermöglichen, die zumindest abschnittsweise mindestens eine hohlzylinderförmige Materialschicht aufweisen.

Diese Aufgabe wird weiterhin durch ein Verfahren mit den Merkmalen des Anspruchs 17 gelöst. Die Vorteile des erfindungsgemäßen Verfahrens entsprechen den bereits beschriebenen Vorteilen der erfindungsgemäßen Messvorrichtung. Das erfindungsgemäße Verfahren kann insbesondere auch mit den Merkmalen der Ansprüche 2 bis 16 weitergebildet werden. Entsprechend kann die Messvorrichtung gemäß den Ansprüchen 1 bis 16 durch die Merkmale der Verfahrensansprüche weitergebildet werden.

Ein Verfahren nach Anspruch 18 gewährleistet eine vollumfängliche Vermessung des Prüfobjekts. Das Prüfobjekt ist um eine durch den zweiten Brennpunkt verlaufende Drehachse verschwenkbar und/oder der dritte Spiegel ist um die durch den ersten Brennpunkt verlaufende z-Achse verschwenkbar. Hierdurch ist das Prüfobjekt in einem weiten Umfangsbereich vermessbar, wobei insbesondere auch ein abgeschatteter Bereich bei entsprechender Verschwenkbarkeit bzw. Drehbarkeit vermessbar ist. Für eine Vermessung des Prüfobjekts inline im Herstellungsprozess ist insbesondere der dritte Spiegel um die z-Achse verschwenkbar bzw. drehbar. Im Herstellungsprozess ist das Prüfobjekt selbst in der Regel nicht um seine Mittellängsachse verschwenkbar bzw. drehbar.

Vorzugsweise weist das Prüfobjekt zumindest abschnittsweise mindestens eine hohlzylinderförmige Materialschicht auf, wobei die Materialschicht insbesondere aus einem Kunststoff ist. Ein solches Verfahren gewährleistet eine flexible Vermessung von hohlzylinderförmigen Prüfobjekten. Ist das Prüfobjekt beispielsweise hohlzylinderförmig als Rohr ausgebildet, so ist eine Vermessung der Wanddicke entlang des Umfangs und der Länge des Rohrs möglich. Weist das Rohr bzw. Prüfobjekt zusätzlich noch mehrere Materialschichten auf, so können auch die Schichtdicken der Materialschichten über den Umfang und die Länge vermessen werden. Entsprechendes gilt für Prüfobjekte, die im weitesten Sinne hohlzylinderförmig ausgebildet sind und eine Mittellängsachse aufweisen und/oder im weitesten Sinne hohlzylinderförmige Materialschichten mit kreisförmigem Querschnitt aufweisen. Vorzugsweise ist das Prüfobjekt als Rohr mit einem kreisförmigen Querschnitt ausgebildet, das aus einem einheitlichen Material oder aus mehreren hohlzylinderförmigen Materialschichten ausgebildet ist. Das Prüfobjekt ist insbesondere aus Kunststoff ausgebildet. Zur Messung von Prüfobjekten aus Kunststoff ist insbesondere THz-Strahlung geeignet. Prüfobjekte mit kreisförmigem Querschnitt sind derart angeordnet, dass eine Mittellängsachse der Prüfobjekte durch den zweiten Brennpunkt verläuft. Bei einer derartigen Anordnung der Prüfobjekte trifft die Strahlung radial auf die Oberfläche der Prüfobjekte, wodurch eine hohe Messgenauigkeit erzielt wird. Ist das Prüfobjekt beispielsweise als Vollzylinder ausgebildet, so ist eine Vermessung der Wanddicke einer hohlzylinderförmigen Materialschicht möglich.

Vorzugsweise ist die mindestens eine Sender-Empfänger-Einheit derart ausgebildet, dass elektromagnetische Strahlung mit einer Frequenz im Bereich von 0,01 THz bis 50 THz, insbesondere von 0,05 THz bis 20 THz, und insbesondere von 0,1 THz bis 10 THz emittiert wird. Ein solches Verfahren gewährleistet eine einfache Vermessung von Prüfobjekten aus Kunststoff.

Weitere Merkmale, Vorteile und Einzelheiten der Erfindung ergeben sich aus der nachfolgenden Beschreibung mehrerer Ausführungsbeispiele. Es zeigen:
- Fig. 1: eine Seitenansicht einer Messvorrichtung zur Vermessung eines Prüfobjekts gemäß einem ersten Ausführungsbeispiel,
- Fig. 2: eine Draufsicht auf die Messvorrichtung in Fig. 1,
- Fig. 3: eine Seitenansicht einer Messvorrichtung zur Vermessung eines Prüfobjekts gemäß einem zweiten Ausführungsbeispiel,
- Fig. 4: eine Draufsicht auf die Messvorrichtung in Fig. 3,
- Fig. 5: eine Seitenansicht einer Messvorrichtung zur Vermessung eines Prüfobjekts gemäß einem dritten Ausführungsbeispiel,
- Fig. 6: eine erste Seitenansicht einer Messvorrichtung zur Vermessung eines Prüfobjekts gemäß einem vierten Ausführungsbeispiel,
- Fig. 7: eine zweite und um 90° gedrehte Seitenansicht der Messvorrichtung in Fig. 6,
- Fig. 8: eine Draufsicht auf eine Messvorrichtung zur Vermessung eines Prüfobjekts mit zwei Spiegel-Anordnungen und zwei zugehörigen Sender-Empfänger-Einheiten gemäß einem fünften Ausführungsbeispiel, und
- Fig. 9: einen zeitlichen Verlauf einer als THz-Pulse emittierten Strahlung.

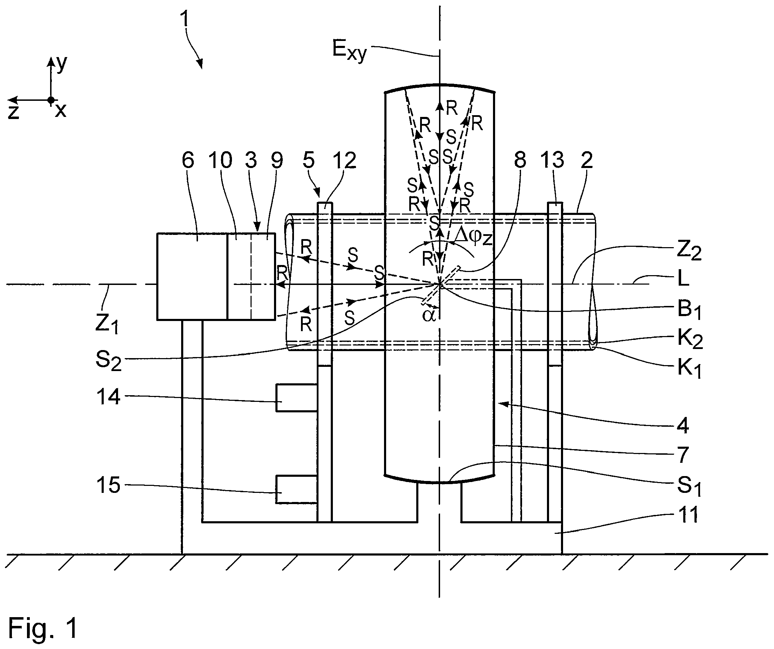

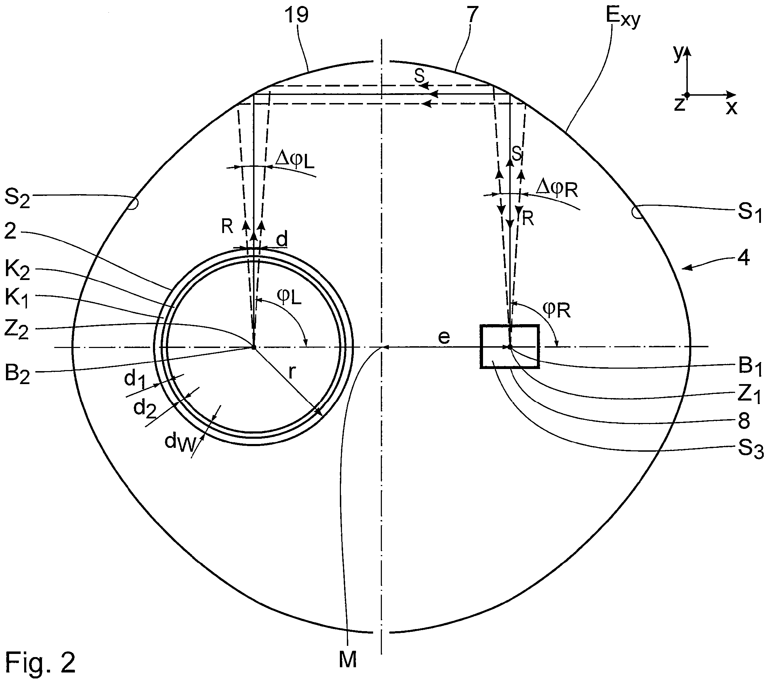

Nachfolgend ist anhand der Fig. 1 und 2 ein erstes Ausführungsbeispiel der Erfindung beschrieben. Eine Messvorrichtung 1 weist zur Vermessung eines Prüfobjekts 2 eine Sender-Empfänger-Einheit 3, eine zugehörige Spiegel-Anordnung 4, einen Prüfobjekthalter 5 und eine Steuereinheit 6 auf.

Die Spiegel-Anordnung 4 umfasst einen ersten Spiegel 7, der symmetrisch zu einer x-z-Ebene ausgebildet ist. Die x-z-Ebene ist durch eine x-Richtung und eine senkrecht dazu verlaufende z-Richtung definiert. Der erste Spiegel 7 ist in einer x-y-Ebene E_{xy}, die senkrecht zu der x-z-Ebene verläuft, und parallel dazu parabelförmig gekrümmt. Der erste Spiegel 7 bildet also in der x-y-Ebene E_{xy} eine Spiegeloberfläche S₁ in Form einer Parabel aus. Aufgrund der parabelförmigen Krümmung weist der erste Spiegel 7 in der x-y-Ebene E_{xy} einen ersten Brennpunkt B₁ auf.

Die Spiegel-Anordnung 4 umfasst außerdem einen zweiten Spiegel 19, der symmetrisch zu der x-z-Ebene E_{xz} ausgebildet ist. Der zweite Spiegel 19 ist in der x-y-Ebene E_{xy} und parallel dazu parabelförmig gekrümmt. Der zweite Spiegel 19 bildet also in der x-y-Ebene E_{xy} eine Spiegeloberfläche S₂ in Form einer Parabel aus. Aufgrund der parabelförmigen Krümmung weist der zweite Spiegel 19 in der x-y-Ebene E_{xy} einen zweiten Brennpunkt B₂ auf. Die Brennpunkte B₁ und B₂ haben in der x-Richtung jeweils einen Abstand e von einem Mittelpunkt M der Spiegel-Anordnung 4. Die Öffnungen der Spiegel 7, 19 sind einander zugewandt. Die Spiegel 7, 19 sind einander direkt gegenüberliegend angeordnet und sind bezüglich einer y-z-Ebene E_{yz} spiegelsymmetrisch zueinander. Die y-z-Ebene E_{yz} verläuft senkrecht zu der x-y-Ebene E_{xy}.

Die Spiegel-Anordnung 4 umfasst ferner einen dritten Spiegel 8, der im ersten Brennpunkt B₁ angeordnet ist. Der dritte Spiegel 8 ist plan ausgebildet, weist also eine plane Spiegeloberfläche S₃ auf. Der dritte Spiegel 8 schließt mit der x-y-Ebene E_{xy} einen Winkel α ein, wobei für α - abhängig von der Anordnung der Sender-Empfänger-Einheit 3 gilt: 30° ≤ α ≤ 60°, insbesondere 35° ≤ α ≤ 55°, und insbesondere 40° ≤ α ≤ 50°. Vorzugsweise beträgt der Winkel α = 45°. Der dritte Spiegel 8 ist vorzugsweise derart angeordnet, dass der erste Brennpunkt B₁ im Wesentlichen mittig auf der Spiegeloberfläche S₃ liegt.

Die Sender-Empfänger-Einheit 3 umfasst einen Sender 9 zum Emittieren von Strahlung S. Die emittierte Strahlung wird von dem Sender 9 bis zu dem Prüfobjekt 2 nachfolgend mit S bezeichnet. Die an dem Prüfobjekt 2 reflektierte Strahlung wird nachfolgend von dem Prüfobjekt 2 bis zu einem Empfänger 10 mit R bezeichnet. Der Empfänger 10 dient zum Detektieren der an dem Prüfobjekt 2 reflektierten Strahlung R. Zur Vermessung des Prüfobjekts 2 wird mittels der Steuereinheit 6 die detektierte Strahlung R ausgewertet.

Durch die parabelförmige Krümmung des ersten und zweiten Spiegels 7 bzw. 19 erfolgt eine Umlenkung der Strahlung S, R zwischen den Brennpunkten B₁ und B₂. Demgegenüber dient der dritte Spiegel 8 zur Umlenkung der Strahlung S, R zwischen einer quer bzw. senkrecht zu der x-y-Ebene E_{xy} verlaufenden z-Richtung und der x-y-Ebene E_{xy}. Die z-Richtung verläuft senkrecht zu der x-Richtung und der y-Richtung, sodass die x-, y- und die z-Richtung ein kartesisches Koordinatensystem ausbilden.

Die Sender-Empfänger-Einheit 3 ist in der z-Richtung beabstandet zu der x-y-Ebene E_{xy} angeordnet. Die Sender-Empfänger-Einheit 3 ist entlang einer ersten z-Achse Z₁ angeordnet, die parallel zu der z-Richtung durch den ersten Brennpunkt B₁ verläuft.

Die Sender-Empfänger-Einheit 3, die Spiegel-Anordnung 4, der Prüfobjekthalter 5 und die Steuereinheit 6 sind an einem Grundgestell 11 der Messvorrichtung 1 befestigt. Der Prüfobjekthalter 5 ist derart ausgebildet, dass das Prüfobjekt 2 um eine zweite z-Achse Z₂ drehbar ist. Die zweite z-Achse Z₂ verläuft parallel zu der z-Richtung durch den zweiten Brennpunkt B2. Hierzu weist der Prüfobjekthalter 5 beispielsweise zwei Halteaufnahmen 12, 13 auf, die beidseitig der x-y-Ebene E_{xy} und konzentrisch zu der zweiten z-Achse Z₂ angeordnet sind. Die Halteaufnahmen 12, 13 sind relativ zu dem Grundgestell 11 um die zweite z-Achse Z₂ drehbar. Hierzu weist der Prüfobjekthalter 5 eine erste elektrische Antriebseinheit 14 auf, die die Halteaufnahmen 12, 13 synchron drehantreibt. Mittels einer zweiten elektrischen Antriebseinheit 15 ist der Prüfobjekthalter 5 in z-Richtung linear verfahrbar.

Das Prüfobjekt 2 ist hohlzylinderförmig ausgebildet und weist einen kreisförmigen bzw. ringförmigen Querschnitt auf. Das Prüfobjekt 2 ist mittels des Prüfobjekthalters 5 derart angeordnet, dass eine Mittellängsachse L deckungsgleich mit der zweiten z-Achse Z₂ ist. Das Prüfobjekt 2 ist zweischichtig ausgebildet und weist zwei hohlzylinderförmige Materialschichten K₁ und K₂ auf. Das Prüfobjekt 2 ist aus Kunststoff, wobei insbesondere die zwei Materialschichten K₁ und K₂ aus unterschiedlichen Kunststoffmaterialien sind. Zur Vermessung des Prüfobjekts 2 ist die Sender-Empfänger-Einheit 3 derart ausgebildet, dass die elektromagnetische Strahlung S, R mit einer Frequenz im Bereich von 0,01 THz bis 50 THz, insbesondere von 0,05 THz bis 20 THz, und insbesondere von 0,1 THz bis 10 THz emittierbar bzw. detektierbar ist. Vorzugsweise wird die Strahlung S pulsförmig emittiert, also THz-Pulse erzeugt.

Zur Fokussierung der Strahlung S, R in der z-Richtung sind der erste Spiegel 7 und der zweite Spiegel 19 in der z-Richtung konkav gekrümmt. Die Spiegeloberfläche S₁ des ersten Spiegels 7 und die Spiegeloberfläche S₂ des zweiten Spiegels 19 weisen in der z-Richtung zusammen eine elliptische Krümmung auf.

Die Funktionsweise der Messvorrichtung 1 ist wie folgt:
Der Sender 9 emittiert Strahlung S in Form von THz-Pulsen. Die Erzeugung von THz-Pulsen ist grundsätzlich bekannt. THz-Pulse werden beispielsweise optisch mittels Femtosekunden-Laserpulsen und photoleitenden Schaltern erzeugt. Die Strahlung S wird im Wesentlichen in der z-Richtung emittiert und auf den ersten Brennpunkt B₁ fokussiert.

Durch den dritten Spiegel 8 wird die Strahlung S von der z-Richtung in die x-y-Ebene E_{xy} umgelenkt und trifft auf die Spiegeloberfläche S₁ des ersten Spiegels 7. Durch den ersten Spiegel 7 wird die Strahlung S umgelenkt und trifft dann auf die Spiegeloberfläche S₂ des zweiten Spiegels 19. Aufgrund der parabelförmigen Krümmung des zweiten Spiegels 19 wird die von dem ersten Spiegel 7 kommende Strahlung S in Richtung des zweiten Brennpunkts B₂ reflektiert. Da sich im Strahlengang zwischen der Spiegeloberfläche S₂ und dem zweiten Brennpunkt B₂ das Prüfobjekt 2 befindet, trifft die Strahlung S radial auf das Prüfobjekt 2 und wird an den verschiedenen Grenzschichten des Prüfobjekts 2 reflektiert. Die einzelnen Grenzschichten sind die äußere Oberfläche und die innere Oberfläche des Prüfobjekts 2 sowie die dazwischenliegende Grenzschicht der Materialschichten K₁ und K₂. Die THz-Pulse werden von der Sender-Empfänger-Einheit 3 somit radial auf das Prüfobjekt 2 bzw. das Rohr 2 eingestrahlt.

Die reflektierte Strahlung R bzw. die reflektierten THz-Pulse laufen entlang desselben Strahlengangs zurück zu der Sender-Empfänger-Einheit 3 und werden dort von dem Empfänger 10 detektiert. Der Aufbau des Empfängers 10 ist grundsätzlich bekannt. THz-Pulse werden beispielsweise durch optisches Abtasten (Sampling) mit Femtosekunden-Laserpulsen detektiert.

Bei der Vermessung des Prüfobjekts 2 werden insbesondere eine Wanddicke dw des Prüfobjekts 2 sowie Schichtdicken d₁ und d₂ der Materialschichten K₁ und K₂ bestimmt. Die Messung der Wanddicke dw sowie der Schichtdicken d₁ und d₂ basieren auf der Messung von Laufzeitdifferenzen der an den einzelnen Grenzschichten reflektierten THz-Pulse. Mittels der Steuereinheit 6 werden die Laufzeitdifferenzen ausgewertet und die Dicken d_{W}, d₁ und d₂ ermittelt.

In den Figuren 1 und 2 ist mit durchgezogenen Linien ein idealer Strahl eingezeichnet. Die Strahlung S trifft als idealer Strahl punktförmig auf das Prüfobjekt 2, sodass das Prüfobjekt 2 in einem Messpunkt vermessen wird. Durch Drehung des Prüfobjekts 2 um die eine Drehachse darstellende zweite z-Achse Z₂ mittels des Prüfobjekthalters 5 ist das Prüfobjekt 2 entlang einer Umfangslinie vollständig vermessbar. Hierzu werden die Halteaufnahmen 12, 13 mittels der Antriebseinheit 14 um die zweite z-Achse Z₂ gedreht. Mittels der zweiten Antriebseinheit 15 ist der Prüfobjekthalter 5 zudem entlang der z-Richtung linear verfahrbar, sodass das Prüfobjekt 2 auch entlang seiner Länge vollständig vermessen wird.

In den Fig. 1 und 2 ist ferner eine reale Strahlausbreitung der Strahlung S, R mit gestrichelten Linien eingezeichnet. Die emittierte Strahlung S wird mittels der Sender-Empfänger-Einheit 3 zunächst in den ersten Brennpunkt B₁ fokussiert. Hierzu weist die Sender-Empfänger-Einheit 3 beispielsweise eine Linse auf. Die an dem dritten Spiegel 8 reflektierte Strahlung S weist eine Strahldivergenz auf. Die Strahlung S, R weist einerseits einen Divergenzwinkel Δϕ_{R} in der x-y-Ebene E_{xy} und einen Divergenzwinkel Δϕ_{Z} in der z-Richtung auf. Durch die parabelförmige Krümmung des ersten Spiegels 7 und zweiten Spiegels 19 in der x-y-Ebene E_{xy} wird die Strahlung S, R auf den jeweiligen Brennpunkt B₁ und B₂ fokussiert. Die Strahlung S trifft bei einer realen Strahlausbreitung nicht punktförmig auf das Prüfobjekt 2, sondern in einem Messbereich, wobei die einzelnen Strahlen bzw. Teilstrahlen jeweils radial auf das Prüfobjekt 2 treffen. Die Größe des Messbereichs hängt von dem Divergenzwinkel Δϕ_{R} und einem Radius r des Prüfobjekts 2 ab.

Der dritte Spiegel 8 ist derart angeordnet, dass die Strahlung S idealerweise mit einem Winkel ϕ_{R} zu der x-Richtung zu dem ersten Spiegel 7 reflektiert wird, wobei die Strahlung S aufgrund der realen Strahlausbreitung einen Divergenzwinkel Δϕ_{R} aufweist. Aufgrund der festen Anordnung des dritten Spiegels 8 gilt für den Winkel ϕ_{R}: ϕ_{R} = 90°. Die Strahlung S trifft bei idealer Strahlausbreitung mit einem Winkel ϕ_{L} relativ zu der z-Richtung auf das Prüfobjekt 2, wobei die Strahlung S beim Auftreffen auf das Prüfobjekt 2 einen Divergenzwinkel Δϕ_{L} aufweist.

Die Abmessung d des Messbereichs unter einem bestimmten Winkel ϕ_{L} ist direkt proportional zum Radius r des Prüfobjekts 2. Für einen möglichst kleinen Messbereich muss Δϕ_{L} möglichst klein sein. Der Öffnungswinkel Δϕ_{L} ist vom Winkel ϕ_{R} abhängig. Der Winkel Δϕ_{L} ist umso kleiner, je kleiner ϕ_{R} ist.

Mittels einer einzigen Sender-Empfänger-Einheit 3 sowie der zugehörigen Spiegel-Anordnung 4 kann das Prüfobjekt 2 somit vollständig vermessen werden. Trotz der divergenten Strahlausbreitung trifft die Strahlung S bzw. der jeweilige THz-Puls radial auf die Grenzschichten des Prüfobjekts 2, also senkrecht auf die Grenzschichten und zudem zu gleichen Zeitpunkten. Hierdurch wird gewährleistet, dass die reflektierte Strahlung R eine hohe Signalqualität aufweist und insbesondere die reflektierten THz-Pulse nicht verwaschen und in ihrer Amplitude abgeschwächt sind.

Dadurch, dass die Spiegeloberfläche S₁ und S₂ auch in der z-Richtung elliptisch gekrümmt ist, wird die Strahlung S, R auch in der z-Richtung fokussiert. Der erste und zweite Spiegel 7 bzw. 19 sind in der z-Richtung zusammen vorzugsweise derart elliptisch gekrümmt, dass ein erster Brennpunkt mit dem ersten Brennpunkt B₁ zusammenfällt und ein zweiter Brennpunkt auf der äußeren Oberfläche des Prüfobjekts 2 liegt. Dies ist in Fig. 1 veranschaulicht. Die Strahlung S weist somit auch in der z-Richtung einen optimierten, also einen möglichst kleinen Messbereich auf.

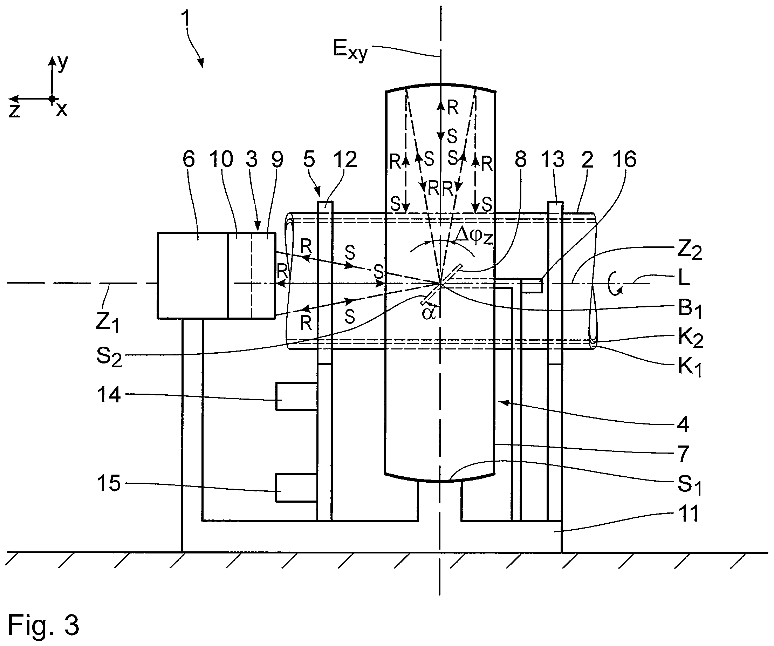

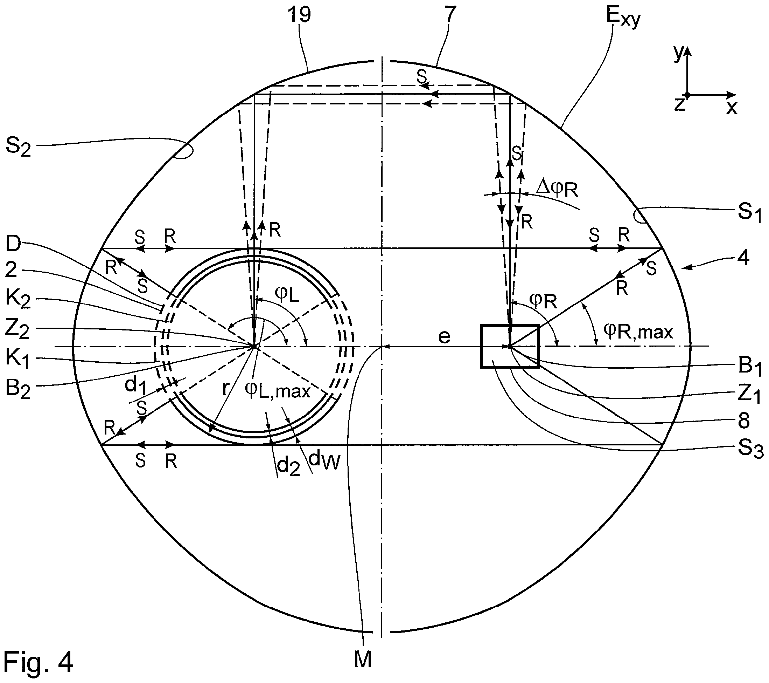

Nachfolgend ist anhand der Fig. 3 und 4 ein zweites Ausführungsbeispiel der Erfindung beschrieben. Im Unterschied zu dem ersten Ausführungsbeispiel ist der dritte Spiegel 8 um die erste z-Achse Z₁ mittels einer dritten Antriebseinheit 16 verschwenkbar, insbesondere um 360° drehbar. Der Winkel ϕ_{R} ist somit durch die Drehung veränderbar. Hierdurch ist das Prüfobjekt 2, selbst wenn dieses um die zweite z-Achse Z₂ fest steht, in einem weiten Umfangsbereich vermessbar. In Fig. 4 sind im Vergleich zu Fig. 2 zusätzliche Strahlverläufe der Strahlung S eingezeichnet, die eine Vermessung des Prüfobjekts 2 veranschaulichen. Unabhängig von dem Winkel ϕ_{R} wird die Strahlung S mittels des ersten Spiegels 7 und zweiten Spiegels 19 zwischen den Brennpunkten B₁ und B₂ umgelenkt. Beim Vermessen des Prüfobjekts 2 trifft die Strahlung S unabhängig von dem Winkel ϕ_{R} immer radial bzw. senkrecht auf das Prüfobjekt 2.

Bei einem Winkel ϕ_{R,max} tangiert die zu dem Prüfobjekt 2 verlaufende Strahlung S das Prüfobjekt 2, so dass das Prüfobjekt 2 bei größeren Winkeln als ϕ_{R,max} an einer dem dritten Spiegel 8 abgewandten Seite abgeschattet wird. Der abgeschattete Bereich des Prüfobjekts 2 ist in Fig. 4 gestrichelt dargestellt und mit D bezeichnet.

Die Strahlung S trifft bei einem Winkel ϕ_{R,max} unter einem Winkel ϕ_{L,max} auf das Prüfobjekt 2, so dass der maximal vermessbare Winkelbereich des Prüfobjekts 2, wenn dieses um die zweite z-Achse Z₂ fest steht, 2ϕ_{L,max} beträgt.

Der abgeschattete Bereich D wird dadurch vermessen, dass das Prüfobjekt 2 entsprechend dem ersten Ausführungsbeispiel um die zweite z-Achse Z₂ verschwenkt wird. Im Unterschied zu dem ersten Ausführungsbeispiel muss das Prüfobjekt 2 jedoch nicht um 360° um die zweite Z-Achse Z₂ drehbar sein, sondern lediglich derart verschwenkbar sein, dass der abgeschattete Bereich D in einer verschwenkten Position in dem vermessbaren Winkelbereich 2ϕ_{L,max} liegt.

Ein Unterschied im Vergleich zum ersten Ausführungsbeispiel ist, dass der erste Spiegel 7 und der zweite Spiegel 19 in der z-Richtung parabolisch gekrümmt sind, wobei der erste Brennpunkt B₁ bei allen Winkeln ϕ_{R} mit dem Brennpunkt der Parabel zusammenfällt. Durch Reflexion der Strahlung S wird die Strahlung S in der z-Richtung kollimiert. Dies ist in Fig. 3 veranschaulicht. Durch die parabolische Krümmung des ersten Spiegels 7 und zweiten Spiegels 19 wird die Strahlung S in der z-Richtung kollimiert, so dass alle Strahlen bzw. Teilstrahlen unabhängig vom Radius r des Prüfobjekts 2 immer senkrecht auf das Prüfobjekt 2 einfallen. Die Ausdehnung des Messbereichs in der z-Richtung ist der Durchmesser der kollimierten Strahlung S, der durch den Divergenzwinkel Δϕ_{Z} gegeben ist bzw. einstellbar ist.

Hinsichtlich des weiteren Aufbaus und der weiteren Funktionsweise wird auf das erste Ausführungsbeispiel verwiesen.

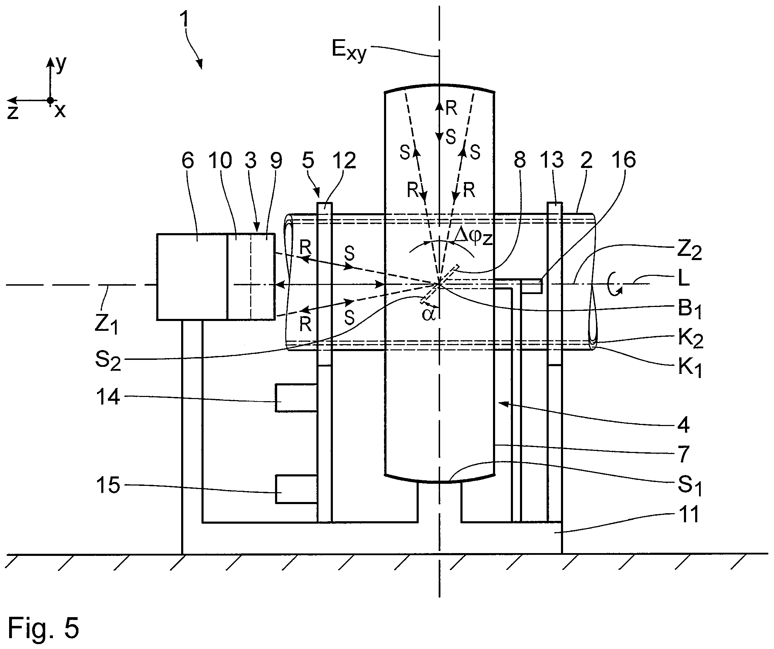

Nachfolgend ist anhand von Fig. 5 ein drittes Ausführungsbeispiel der Erfindung beschrieben. Im Unterschied zu den vorangegangenen Ausführungsbeispielen sind der erste Spiegel 7 und der zweite Spiegel 19 entlang der z-Richtung sphärisch gekrümmt. Die Strahlung S ist somit in der x-y-Ebene E_{xy} und entlang der z-Richtung in den zweiten Brennpunkt B₂ fokussiert. Dies ist insbesondere vorteilhaft, wenn der Radius r des Prüfobjekts 2 wesentlich kleiner als die Längen a bzw. b ist. Hinsichtlich des weiteren Aufbaus und der weiteren Funktionsweise wird auf die vorangegangenen Ausführungsbeispiele verwiesen.

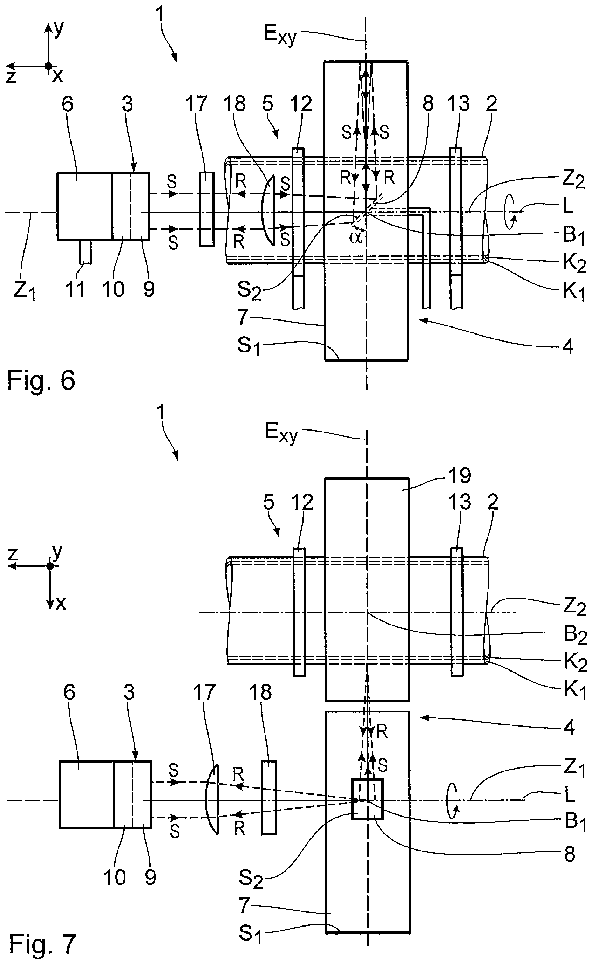

Nachfolgend ist anhand der Fig. 6 und 7 ein viertes Ausführungsbeispiel der Erfindung beschrieben. Im Unterschied zu den vorangegangenen Ausführungsbeispielen sind der erste Spiegel 7 und der zweite Spiegel 19 in der z-Richtung plan ausgebildet. Zur Fokussierung der Strahlung S sind zwei Fokussier-Elemente 17, 18 im Strahlengang zwischen der Sender-Empfänger-Einheit 3 und dem dritten Spiegel 8 angeordnet. Die Fokussier-Elemente 17, 18 rotieren zusammen mit dem dritten Spiegel 8 um die erste z-Achse Z₁. Die einfallende kollimierte Strahlung S wird mittels dem ersten Fokussier-Element 17 in der x-Richtung auf den ersten Brennpunkt B₁ fokussiert. Hierzu ist das erste Fokussier-Element 17 als zylindrische Linse ausgebildet. Das zweite Fokussier-Element 18 fokussiert die Strahlung in der y-Richtung, wodurch nach Reflexion der Strahlung S an dem dritten Spiegel 8 die Strahlung S in der z-Richtung fokussiert wird. Dies ist in Fig. 6 veranschaulicht. Das zweite Fokussier-Element 18 ist ebenfalls als zylindrische Linse ausgebildet, deren Zylinder in der x-Richtung ausgerichtet ist und senkrecht zu dem in der y-Richtung ausgerichteten Zylinder der Linse 17 verläuft. Der Abstand der Linse 18 bis zu der Oberfläche des Prüfobjekts 2 entspricht der Brennweite der Linse 18. Die Strahlung S divergiert somit lediglich in der x-y-Ebene E_{xy}. Durch Veränderung der Position der zweiten Linse 18 entlang der z-Achse Z₁ erfolgt eine Fokussierung der Strahlung S in der z-Richtung auf Prüfobjekte 2 mit verschiedenem Radius r. Das bedeutet, die Fokussierung in z-Richtung kann auf Prüfobjekte 2 mit unterschiedlichem Radius r durch Verändern der Position der zweiten Linse 18 entlang der z-Achse Z₁ angepasst werden. Alternativ können der dritte Spiegel 8 und das zweite Fokussier-Element 18 integriert ausgebildet sein, so dass der dritte Spiegel 8 aufgrund einer Krümmung selbst eine Fokussierung in der z-Richtung bewirkt. Hinsichtlich des weiteren Aufbaus und der weiteren Funktionsweise wird auf die vorangegangenen Ausführungsbeispiele verwiesen.

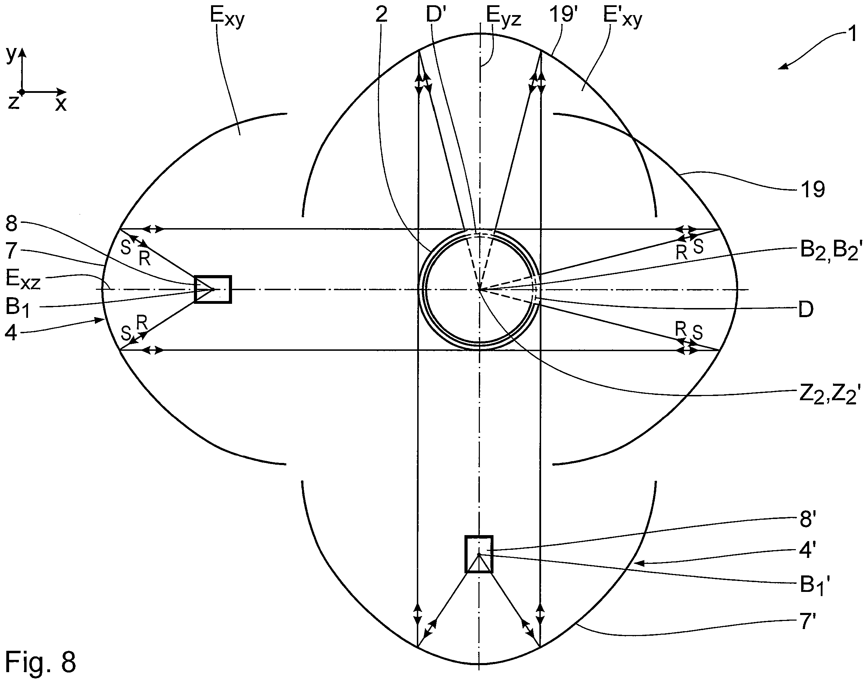

Nachfolgend ist anhand von Fig. 8 ein fünftes Ausführungsbeispiel der Erfindung beschrieben. Im Unterschied zu den vorangegangenen Ausführungsbeispielen weist die Messvorrichtung 1 genau zwei Spiegel-Anordnungen 4 und zwei zugehörige Sender-Empfänger-Einheiten 3 auf. Zur Unterscheidung wird die zweite Spiegel-Anordnung 4 sowie die zugehörigen Bauteile nachfolgend mit einem ' bezeichnet. Die Spiegel-Anordnungen 4 und 4' sind identisch ausgebildet. Sie sind um 90° gedreht zueinander angeordnet, wobei die zweiten Brennpunkte B₂, B₂' auf der gemeinsamen zweiten z-Achse Z₂, Z₂' angeordnet sind. Der erste Brennpunkt B₁ und der zweite Brennpunkt B₂ der ersten Spiegel-Anordnung 4 liegen in der x-z-Ebene E_{xz}, während der erste Brennpunkt B₁' und der zweite Brennpunkt B₂' der zweiten Spiegel-Anordnung 4' in der y-z-Ebene E_{yz} liegen. Die ersten Brennpunkte B₁, B₁' der Spiegel-Anordnungen 4, 4' sind um die zweite z-Achse Z₂, Z₂' um 90° verdreht zueinander angeordnet.

Der erste Spiegel 7 der ersten Spiegel-Anordnung 4 ist einem ersten Bereich des Prüfobjekts 2 zugewandt, während der erste Spiegel 7' der zweiten Spiegel-Anordnung 4' einem zweiten Bereich des Prüfobjekts 2 zugewandt ist, der zu dem ersten Bereich des Prüfobjekts 2 im Wesentlichen um 90° um die z-Achse Z₂, Z₂' verdreht ist.

Die dritten Spiegel 8, 8' sind um ihre zugehörigen und durch den jeweiligen ersten Brennpunkt B₁, B₁' verlaufenden ersten z-Achsen Z₁ und Z₁' drehbar. Das Prüfobjekt 2 wird inline im Herstellungsprozess vermessen und ist dementsprechend um die eigene Mittellängsachse L, also um die zweite z-Achse Z₂ bzw. Z₂' nicht verschwenkbar. Wie zu dem zweiten Ausführungsbeispiel bereits erläutert wurde, hat das Prüfobjekt 2 bei der Vermessung durch die jeweilige Spiegel-Anordnung 4, 4' und die zugehörige Sender-Empfänger-Einheit 3, 3' einen abgeschatteten Bereich D, D'. Durch die Positionierung der Spiegel-Anordnungen 4, 4' kann jedoch die Spiegel-Anordnung 4' den abgeschatteten Bereich D der Spiegel-Anordnung 4 vermessen und entsprechend die Spiegel-Anordnung 4 den abgeschatteten Bereich D' der Spiegel-Anordnung 4'. Somit ist das Prüfobjekt 2 vollumfänglich vermessbar, obwohl dieses nicht verschwenkbar bzw. drehbar ist. Das Prüfobjekt 2 weist aufgrund des Herstellungsprozesses eine Extrusionsrichtung auf, die in der z-Richtung verläuft, so dass das Prüfobjekt 2 auch entlang seiner Länge vermessbar ist bzw. vermessen wird. Der Prüfobjekthalter 5 muss das Prüfobjekt 2 somit weder aktiv verschwenken noch linear verfahren und kann dementsprechend einen vereinfachten Aufbau derart aufweisen, dass lediglich eine Führung des Prüfobjekts 2 gewährleistet ist.

Ein Anwendungsbereich der Messvorrichtung 1 ist somit die Inline-Vollprüfung der Wanddicke dw und der Schichtdicken d₁ und d₂ des als Kunststoffrohr ausgebildeten Prüfobjekts 2 im Extrusionsprozess. Die Vermessung des Prüfobjekts 2 erfolgt entsprechend den vorangegangenen Ausführungsbeispielen kontaktfrei und ohne jegliches Kopplungsmedium. Dadurch, dass für die vollständige bzw. vollumfängliche Vermessung des Prüfobjekts 2 lediglich zwei Sender-Empfänger-Einheiten 3, 3' erforderlich sind, bleibt der Aufbau vergleichsweise einfach, wodurch die Messvorrichtung 1 ein akzeptables Kosten-Nutzen-Verhältnis gewährleistet. Falls mehr als zwei Spiegel-Anordnungen 4 und entsprechend zugehörige Sender-Empfänger-Einheiten 3 benötigt werden, ist dies bei der Messvorrichtung 1 selbstverständlich möglich. Die Sender-Empfänger-Einheiten 3, 3' sind zudem ortsfest zu den zugehörigen ersten und zweiten Spiegeln 7, 7' bzw. 19, 19' angeordnet, wodurch ebenfalls ein einfacher Aufbau gewährleistet ist.

Hinsichtlich des weiteren Aufbaus und der weiteren Funktionsweise wird auf die vorangegangenen Ausführungsbeispiele verwiesen.

Die Merkmale der beschriebenen Ausführungsbeispiele können beliebig miteinander kombiniert werden. Insbesondere kann die Fokussierung bzw. Kollimation der Strahlung S in der z-Richtung je nach Bedarf erfolgen und beliebig mit anderen Merkmalen der Messvorrichtung 1 kombiniert werden. Zudem kann die Spiegeloberfläche S₁, S₂ des jeweiligen ersten Spiegels 7 bzw. 7' bzw. zweiten Spiegels 19 bzw. 19' in der z-Richtung dahingehend optimiert werden, dass für einen vordefinierten Radiusbereich des Prüfobjekts 2 ein Messbereich bzw. Messpunkt mit akzeptabler Fokusgröße erzielt wird. Hierzu kann die Spiegeloberfläche S₁ bzw. S₂ in der z-Richtung als Freiformfläche ausgebildet sein.

Der bevorzugte Anwendungsbereich der erfindungsgemäßen Messvorrichtung 1 ist die Vollprüfung bzw. Inline-Vollprüfung von Wand- und/oder Schichtdicken von Kunststoffrohren, insbesondere im Herstellungs- bzw. Extrusionsprozess.

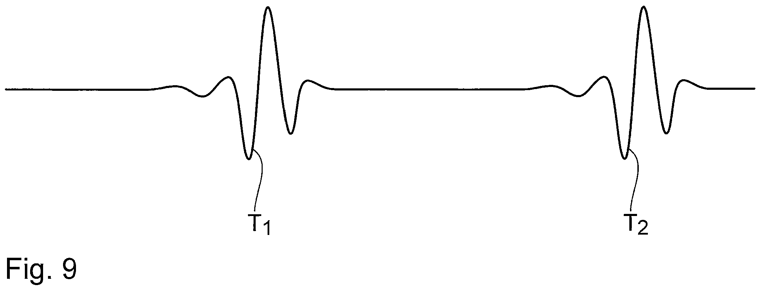

Die emittierte Strahlung ist insbesondere als gepulste THz-Strahlung, als CW-THz-Strahlung (CW: Continuous Wave) und/oder als FMCW-THz-Strahlung (FMCW: Frequency Modulated Continuous Wave) ausgebildet. Ein zeitlicher Verlauf einer gepulsten THz-Strahlung ist in Fig. 9 dargestellt. Die aufeinanderfolgenden THz-Pulse T₁ und T₂ sowie entsprechende weitere THz-Pulse weisen jeweils ein Frequenzspektrum auf, das in dem erwähnten THz-Bereich liegt. Mittels der THz-Strahlung erfolgen die Messungen kontaktfrei und ohne Kopplungsmedium.

Aus der Laufzeit der THz-Pulse kann außerdem der Durchmesser bzw. Radius r des Prüfobjekts 2 sowie etwaige Abweichungen von der Kreisform, wie beispielsweise Exzentrizität oder Ovalität bestimmt werden. Der Durchmesser des Prüfobjekts 2 ergibt sich bei bekannten Parametern des parabelförmigen ersten Spiegels 7 bzw. 7' und zweiten Spiegels 19 bzw. 19' direkt aus der Laufzeit des jeweiligen THz-Pulses. Formparameter, wie Exzentrizität und Ovalität, können aus den Abweichungen der Laufzeit einzelner THz-Pulse berechnet werden.

Die Messvorrichtung 1 kann auch mit elektromagnetischen Wellen bzw. elektromagnetischer Strahlung in anderen Frequenzbereichen als dem erwähnten THz-Frequenzbereich oder mit anderen Wellenarten, beispielsweise mit Ultraschallwellen, betrieben werden. Beispielsweise kann ein Prüfobjekt 2 mittels sichtbarer oder infraroter Strahlung vermessen werden. Voraussetzung für die Anwendbarkeit des Verfahrens bzw. die Funktion der Messvorrichtung 1 ist, dass sich die verwendeten Wellen bzw. Partikel strahlförmig ausbreiten und dass das Material der Spiegel und des Prüfobjekts 2 die Wellen bzw. Partikel reflektiert.

## Patentansprüche

1. Messvorrichtung zur Vermessung von Prüfobjekten mit
- mindestens einer Sender-Empfänger-Einheit (3; 3, 3') mit
-- einem Sender (9) zum Emittieren von Terahertz-Strahlung (S),
-- einem zugehörigen Empfänger (10) zum Detektieren einer an einem Prüfobjekt (2) rekflektierten Terahertz-Strahlung (R),
- mindestens einer Spiegel-Anordnung (4; 4, 4') mit
-- einem ersten parabelförmig gekrümmten Spiegel (7; 7, 7'),
--- der in einer x-y-Ebene (E_{xy}; E_{xy}, E_{xy}') einen ersten Brennpunkt (B₁; B₁, B₁') ausbildet, und
-- einem zweiten parabelförmig gekrümmten Spiegel (19; 19, 19'),
--- der in der x-y-Ebene (E_{xy}; E_{xy}, E_{xy}') einen zweiten Brennpunkt (B₂; B₂, B₂') ausbildet,
-- einem dritten Spiegel (8; 8, 8') zur Umlenkung der Terahertz-Strahlung (S, R),
- einem Prüfobjekthalter (5) zur Anordnung des Prüfobjekts (2) im zweiten Brennpunkt (B₂; B₂, B₂'), und
- einer Steuereinheit (6) zur Auswertung der detektierten Terahertz-Strahlung (R),
**dadurch gekennzeichnet, dass**
der erste Spiegel (7; 7, 7') und der zweite Spiegel (19; 19, 19') gegenüberliegend und zur Umlenkung der Terahertz-Strahlung (S, R) zwischen ihren Brennpunkten (B₁, B₂; B₁, B₂, B₁', B₂') vorgesehen sind, und
der dritte Spiegel (8; 8, 8') im ersten Brennpunkt (B₁; B₁, B₁') und zur Umlenkung der Terahertz-Strahlung (S, R) zwischen einer quer zu der x-y-Ebene (E_{xy}; E_{xy}, E_{xy}') verlaufenden z-Richtung und der x-y-Ebene (E_{xy}; E_{xy}, E_{xy}') vorgesehen ist.

2. Messvorrichtung nach Anspruch 1, **dadurch gekennzeichnet, dass** die mindestens eine Sender-Empfänger-Einheit ausgebildet ist zur Emittierung und Detektierung von Terahertz-Strahlung mit einer Frequenz im Bereich von 0,01 THz bis 50 THz, insbesondere von 0,05 THz bis 20 THz, und insbesondere von 0,1 THz bis 10 THz, insbesondere von Terahertz-Pulsen.

3. Messvorrichtung nach Anspruch 2, **dadurch gekennzeichnet, dass** die Steuereinheit (6) ausgebildet ist zur Vermessung des Prüfobjekts mittels der Terahertz-Strahlung basierend auf der Messung einer Laufzeitdifferenz der Strahlung, die an Grenzschichten reflektiert wird, z. B. Rohraußenwand, Rohrinnenwand und aneinandergrenzende Materialschichten innerhalb des Prüfobjekts.

4. Messvorrichtung nach einem der vorherigen Ansprüche, **dadurch gekennzeichnet, dass** der erste Spiegel (7; 7, 7') und der zweite Spiegel (19; 19, 19'), insbesondere in Form und/oder Größe, identisch ausgebildet sind.

5. Messvorrichtung nach einem der vorherigen Ansprüche, **dadurch gekennzeichnet,**
**dass** der erste Spiegel (7; 7, 7') eine erste Öffnung aufweist und der zweite Spiegel (19; 19, 19') eine zweite Öffnung aufweist, wobei der erste Spiegel (7; 7, 7') und der zweite Spiegel (19; 19, 19') derart angeordnet sind, dass die erste Öffnung und die zweite Öffnung einander zugewandt sind.

6. Messvorrichtung nach einem der vorherigen Ansprüche, **dadurch gekennzeichnet, dass** der erste Spiegel (7; 7, 7') und der zweite Spiegel (19; 19, 19') spiegelsymmetrisch zueinander angeordnet und ausgebildet sind.

7. Messvorrichtung nach einem der vorherigen Ansprüche, **dadurch gekennzeichnet,**
**dass** der erste Spiegel (7; 7, 7') und der zweite Spiegel (19; 19, 19') beabstandet zueinander angeordnet sind.

8. Messvorrichtung nach einem der vorherigen Ansprüche, **dadurch gekennzeichnet,**
**dass** der erste Spiegel (7; 7, 7') und der zweite Spiegel (19; 19, 19') jeweils als Parabolrinne oder Parabolspiegel ausgeführt sind.

9. Messvorrichtung nach einem der vorherigen Ansprüche, **dadurch gekennzeichnet,**
**dass** der dritte Spiegel (8; 8, 8') die Strahlung (S) auf den ersten Spiegel (7; 7, 7') umlenkt und der erste Spiegel (7; 7, 7') die Strahlung (S) auf den zweiten Spiegel (19; 19, 19') umlenkt, wobei der zweite Spiegel (19; 19, 19') die Strahlung (S) auf den zweiten Brennpunkt (B₂; B₂, B₂') umlenkt.

10. Messvorrichtung nach einem der vorherigen Ansprüche, **dadurch gekennzeichnet,**
**dass** der erste Spiegel (7; 7, 7') die in unterschiedlichen Winkeln auftreffende Strahlung (S) derart auf den zweiten Spiegel (19; 19, 19') umlenkt, dass die Strahlung (S) dann zwischen dem ersten Spiegel (7; 7, 7') und dem zweiten Spiegel (19; 19, 19') stets parallel, aber beabstandet zueinander verläuft.

11. Messvorrichtung nach einem der vorherigen Ansprüche, **dadurch gekennzeichnet,**
**dass** mindestens zwei Spiegel-Anordnungen (4, 4'), insbesondere genau zwei Spiegel-Anordnungen (4, 4'), in der z-Richtung versetzt zueinander angeordnet sind, wobei die mindestens zwei Spiegel-Anordnungen (4, 4') insbesondere identisch aufgebaut sind.

12. Messvorrichtung nach Anspruch 11, **dadurch gekennzeichnet,**
**dass** mindestens zwei der Spiegelanordnungen (4, 4') derart um 90° verdreht zueinander angeordnet sind, dass deren zweiten Brennpunkte (B₂, B₂') auf einer Geraden (Z₂) liegen, die parallel zu der z-Richtung verläuft.

13. Messvorrichtung nach Anspruch 12, **dadurch gekennzeichnet,**
**dass** die ersten Brennpunkte (B₁, B₁') der Spiegel-Anordnungen (4, 4') um 90° verdreht um die Gerade (Z₂) angeordnet sind.

14. Messvorrichtung nach einem der vorherigen Ansprüche, **dadurch gekennzeichnet,**
**dass** jeder Spiegel-Anordnung (4, 4') eine Sender-Empfänger-Einheit (3, 3') zugeordnet ist.

15. Messvorrichtung nach einem der vorherigen Ansprüche, **dadurch gekennzeichnet,**
**dass** der jeweilige erste Spiegel (7; 7, 7') und zweite Spiegel (19; 19, 19') in der z-Richtung eine konkave Krümmung aufweisen, wobei die Krümmung insbesondere aus der Gruppe parabolisch, elliptisch und sphärisch ausgewählt ist.

16. Messvorrichtung nach einem der Ansprüche 1 bis 14, **dadurch gekennzeichnet,**
**dass** der jeweilige erste Spiegel (7; 7, 7') und zweite Spiegel (19; 19, 19') in der z-Richtung plan ausgebildet sind und mindestens ein Fokussier-Element (18) zur Fokussierung der Strahlung (S) in z-Richtung vorgesehen ist.

17. Verfahren zur Vermessung von Prüfobjekten, umfassend die Schritte:
Bereitstellen einer Messvorrichtung (1) nach mindestens einem der vorherigen Ansprüche,
Anordnen eines Prüfobjekts (2) derart, dass dessen Mittellängsachse (L) durch den zweiten Brennpunkt (B₂; B₂, B₂') verläuft,
Emittieren von Terahertz-Strahlung mittels des Senders (9),
Umlenken der emittierten Terahertz-Strahlung (S) mittels des dritten Spiegels (8; 8, 8') und des ersten Spiegels (7; 7, 7') und des zweiten Spiegels (19; 19, 19') in Richtung des zweiten Brennpunkts (B₂; B₂, B₂'),
Reflektieren der Terahertz-Strahlung (S) an dem Prüfobjekt (2),
Umlenken der reflektierten Terahertz-Strahlung (R) mittels des zweiten Spiegels (19; 19, 19') und des ersten Spiegels (7; 7, 7') und des dritten Spiegels (8; 8, 8') in Richtung des Empfängers (10),
Detektieren der reflektierten Terahertz-Strahlung (R) mittels des Empfängers (10), und
Auswerten der detektierten Terahertz-Strahlung (R).

18. Verfahren nach Anspruch 17, **dadurch gekennzeichnet,**
**dass**
das Prüfobjekt (2) und der dritte Spiegel (8; 8, 8') relativ zueinander verschwenkt werden, insbesondere der dritte Spiegel (8; 8, 8') um die parallel zu der z-Richtung durch den ersten Brennpunkt (B₁; B₁, B₁') verlaufende z-Achse (Z₁; Z₁, Z₁') verschwenkt wird.

19. Verfahren nach Anspruch 17 oder 18, **dadurch gekennzeichnet,**
**dass**
ein Prüfobjekt (2) aus Kunststoff vermessen wird, indem eine Laufzeitdifferenz der Terahertz-Strahlung gemessen wird, die an Grenzschichten reflektiert wird, insbesondere Oberflächen des Prüfobjekts (2), z. B. einer Rohraußenwand und/oder Rohrinnenwand und/oder aneinandergrenzender Materialschichten innerhalb des Prüfobjekts (2).

## Claims

1. Measuring device for measuring test objects, with
- at least one transmitter-receiver unit (3; 3, 3'), with
- a transmitter (9) for emitting terahertz radiation (S);
- an associated receiver (10) for detecting a terahertz radiation (R) reflected on a test object (2);
- at least one mirror array (4; 4, 4') with
- a first parabola-shaped, curved mirror (7; 7, 7'),
- which configures in an x-y-plane (E_{xy}; E_{xy}, E_{xy}') a first focal point (B₁; B₁, B₁'), and
- a second parabola-shaped, curved mirror (19; 19, 19'),
- which configures in the x-y-plane (E_{xy}; E_{xy}, E_{xy}') a second focal point (B₂; B₂, B₂'),
- a third mirror (8; 8, 8') for deflecting the terahertz radiation (S, R),
- a test object holder (5) for arranging the test object (2) in the second focal point (B₂; B₂, B₂'); and
- a control unit (6) for evaluating the terahertz radiation (R) detected by the receiver,
**characterised in that**
the first mirror (7, 7, 7') and the second mirror (19; 19, 19') are disposed opposite one another and for deflecting the terahertz radiation (S, R) between their focal points (B₁, B₂; B₁, B₂, B₁', B₂'), and
the third mirror (8; 8, 8') is disposed in the first focal point (B₁; B₁, B₁') and for deflecting the terahertz radiation (S, R) between a z direction running transversally to the x-y plane (E_{xy}; E_{xy}, E_{xy}') and the x-y plane (E_{xy}; E_{xy}, E_{xy}').

2. Measuring device according to Claim 1, **characterised in that** the at least one transmitter-receiver unit is configured for the emission and detection of terahertz radiation with a frequency in the range 0.01 THz to 50 THz, in particular 0.05 THz to 20 THz, and in particular 0.1 THz to 10 THz, in particular of terahertz pulses.

3. Measuring device according to Claim 2, **characterised in that** the control unit (6) is configured for measuring test objects by means of terahertz radiation based on the measurement of a transit time difference of the radiation reflected on the boundary layers such as the pipe outer wall, the pipe inner wall and adjacent material layers within the test object.

4. Measuring device according to any one of the preceding claims, **characterised in that** the first mirror (7; 7, 7') and the second mirror (19; 19, 19'), are in particular configured to be identical in shape and size.

5. Measuring device according to any one of the preceding claims, **characterised in that** the first mirror (7; 7, 7') has a first opening and the second mirror (19; 19, 19') a second opening, wherein the first mirror (7; 7, 7') and the second mirror (19; 19, 19') are arranged in such a way that the first opening and the second opening are facing each other.

6. Measuring device according to any one of the preceding claims, **characterised in that** the first mirror (7; 7, 7') and the second mirror (19; 19, 19') are arranged and configured mirror symmetrically to one another.

7. Measuring device according to any one of the preceding claims, **characterised in that** the first mirror (7; 7, 7') and the second mirror (19; 19, 19') are disposed displaced relative to each other.

8. Measuring device according to any one of the preceding claims, **characterised in that** the first mirror (7; 7, 7') and the second mirror (19; 19, 19') are each constructed as a parabolic trough or parabolic mirror.

9. Measuring device according to any one of the preceding claims, **characterised in that** the third mirror (8; 8, 8') deflects the radiation (S) onto the first mirror (7; 7, 7') and the first mirror (7; 7, 7') deflects the radiation (S) onto the second mirror (19; 19, 19'), wherein the second mirror (19; 19, 19') deflects the radiation (S) onto the second focal point (B₂; B₂, B₂').

10. Measuring device according to any one of the preceding claims, **characterised in that** the first mirror (7; 7, 7') deflects the radiation (S) impinging at different angles onto the second mirror (19; 19, 19') in such a way that the radiation (S) then always runs parallel but spaced apart between the first mirror (7; 7, 7') and the second mirror (19; 19, 19').

11. Measuring device according to any one of the preceding claims, **characterised in that** at least two mirror arrays (4, 4'), in particular precisely two mirror arrays (4, 4') are disposed in the z direction displaced from one another, wherein the at least two mirror arrays are constructed in particular identically.

12. Measuring device according to Claim 11, **characterised in that** at least two of the mirror arrays (4, 4') are disposed rotated 90° to one another, such that their two focal points (B₂, B₂') lie on a straight line (Z₂), running parallel to the z direction.

13. Measuring device according to Claim 12, **characterised in that** the first focal points (B₁, B₁') of the mirror arrays (4, 4') are disposed rotated 90° about the straight line (Z₂).

14. Measuring device according to any one of the preceding claims, **characterised in that** each mirror array (4, 4') is associated with a transmitter-receiver unit.

15. Measuring device according to any one of the preceding claims, **characterised in that** the respective first mirror (7; 7, 7') and second mirror (19; 19, 19') have a concave curvature in the z direction, wherein the curvature is selected, in particular, from the group of parabolic, elliptical and spherical.

16. Measuring device according to any one of Claims 1 to 14, **characterised in that** the respective first mirror (7; 7, 7') and second mirror (19; 19, 19') have a flat configuration in the z direction and at least one focusing element (18) is provided for focusing the radiation (S) in the z direction.

17. Method for measuring test objects, comprising the following steps:
Providing a terahertz measuring device according to at least one of the preceding claims;
Arranging a test object such that its central longitudinal axis (L) runs through the second focal point (B₂; B₂, B₂');
Emitting terahertz radiation by means of the transmitter (9);
Deflecting the emitted terahertz radiation (S) by means of the third mirror (8; 8, 8') and the first mirror (7; 7, 7') and the second mirror (19; 19, 19') in the direction of the second focal point (B₂; B₂, B₂');
Reflecting the terahertz radiation (S) on the test object (2);
Deflecting the reflected terahertz radiation (R) by means of the second mirror (19; 19, 19') and the first mirror (7; 7, 7') and the third mirror (8; 8, 8') in the direction of the receiver (10); and
Detecting the reflected terahertz radiation (R) by use of the receiver (10);
Evaluating the detected radiation (R).

18. Method according to Claim 17, **characterised in that** the test object (2) and the third mirror (8; 8, 8') are pivoted relative to each other, in particular, the third mirror (8; 8, 8') being pivoted about the z axis (Z₁; Z₁, Z₁') running parallel to the z direction through the first focal point (B₁; B₁, B₁').

19. Method according to Claim 17 or 18, **characterised in that** the test object (2) made of plastic is measured, **in that** a transit time difference of the terahertz radiation, reflected on the boundary layers, in particular surfaces of the test object (2), e.g. an external wall and/or internal wall and/or adjacent material layers within the test object (2) is measured.

## Revendications

1. Dispositif de mesure pour le mesurage d'objets à contrôler avec
- au moins une unité émettrice-réceptrice (3 ; 3, 3') comprenant
-- un émetteur (9) pour émettre un rayonnement térahertz (S),
-- un récepteur associé (10) pour détecter un rayonnement térahertz (R) réfléchi sur un objet à contrôler (2),
- au moins un ensemble de miroirs (4 ; 4, 4') comprenant
-- un premier miroir présentant une courbe parabolique (7 ; 7, 7'),
--- qui forme un premier foyer (B₁ ; B₁, B₁') dans un plan x-y (E_{xy} ; E_{xy}, E_{xy}') et
-- un second miroir présentant une courbe parabolique (19 ; 19,19'),
--- qui forme un second foyer (B₂ ; B₂, B₂') dans le plan x-y (E_{xy} ; E_{xy}, E_{xy}')
-- un troisième miroir (8 ; 8', 8) pour dévier le rayonnement térahertz (S, R),
- un porte-objet (5) pour disposer l'objet à contrôler (2) dans le second foyer (B₂ ; B₂, B₂'), et
- une unité de commande (6) pour évaluer le rayonnement térahertz (R) détecté,
**caractérisé en ce que**
le premier miroir (7 ; 7, 7') et le second miroir (19 ; 19, 19') sont prévus de manière à se faire face et pour dévier le rayonnement térahertz (S, R) entre leurs foyers (B₁, B₂ ; B₁, B₂ ; B₁, B₂') et
**que**
le troisième miroir (8 ; 8', 8) est prévu dans le premier foyer (B₁ ; B₁, B₁') et pour dévier le rayonnement térahertz (S, R) entre une direction z s'étendant transversalement au plan x-y et le plan x-y (E_{xy} ; E_{xy}, E_{xy}').

2. Dispositif de mesure suivant la revendication 1, **caractérisé en ce que** l'au moins une unité émettrice-réceptrice est conçue pour émettre et détecter un rayonnement térahertz d'une fréquence dans la plage de 0,01 THz à 50 THz, notamment de 0,05 THz à 20 THz et en particulier de 0,1 THz à 10 THz, notamment des impulsions térahertz.

3. Dispositif de mesure suivant la revendication 2, **caractérisé en ce que** l'unité de commande (6) est conçue pour le mesurage d'un objet à contrôler au moyen d'un rayonnement térahertz sur la base de la mesure d'un décalage de propagation du rayonnement qui est réfléchi sur des couches limites, par exemple sur une paroi extérieure de tube, une paroi intérieure de tube et sur des couches de matériau adjacentes à l'intérieur de l'objet à contrôler.

4. Dispositif de mesure suivant une des revendications précédentes, **caractérisé en ce que** le premier miroir (7 ; 7, 7') et le second miroir (19 ; 19, 19') sont conçus identiques, en particulier en ce qui concerne la forme et/ou la taille.

5. Dispositif de mesure suivant une des revendications précédentes, **caractérisé en ce que** le premier miroir (7 ; 7, 7') présente une première ouverture et le second miroir (19,19,19) présente une seconde ouverture, le premier miroir (7 ; 7, 7') et le second miroir (191919) étant disposés de manière que la première ouverture et la seconde ouverture soient en face l'une de l'autre.

6. Dispositif de mesure suivant une des revendications précédentes, **caractérisé en ce que** le premier miroir (7 ; 7, 7') et le second miroir (19 ; 19,19') sont disposés et conçus avec une symétrie d'image inverse l'un par rapport à l'autre.

7. Dispositif de mesure suivant une des revendications précédentes, **caractérisé en ce que** le premier miroir (7 ; 7, 7') et le second miroir (19 ; 19,19') sont disposés avec un écart l'un par rapport à l'autre.

8. Dispositif de mesure suivant une des revendications précédentes, **caractérisé en ce que** le premier miroir (7 ; 7, 7') et le second miroir (19 ; 19,19') sont respectivement conçus comme canal parabolique ou miroir parabolique.

9. Dispositif de mesure suivant une des revendications précédentes, **caractérisé en ce que** le troisième miroir (8 ; 8', 8) dévie le rayonnement (S) vers le premier miroir (7 ; 7, 7') et que le premier miroir (7 ; 7, 7') dévie le rayonnement (S) vers le second miroir (19 ; 19,19'), le second miroir (19 ; 19,19') déviant le rayonnement (S) vers le second foyer (B₂ ; B₂, B₂').

10. Dispositif de mesure suivant une des revendications précédentes, **caractérisé en ce que** le premier miroir (7 ; 7, 7') dévie le rayonnement (S) incident selon différents angles de telle manière vers le second miroir (19 ; 19,19') que le rayonnement (S) s'étende entre le premier miroir (7 ; 7, 7') et le second miroir (19 ; 19,19') de manière constamment parallèle mais avec un écart par rapport à l'un et à l'autre.

11. Dispositif de mesure suivant une des revendications précédentes, **caractérisé en ce qu'**au moins deux ensembles de miroirs (4, 4'), en particulier deux ensembles de miroirs (4, 4') sont disposés décalés l'un par rapport à l'autre dans la direction z, les au moins deux ensembles de miroirs (4, 4') étant notamment conçus de manière identique.

12. Dispositif de mesure suivant la revendication 11, **caractérisé en ce qu'**au moins deux des ensembles de miroirs (4, 4') sont disposés tournés de 90° l'un par rapport à l'autre de telle manière que leurs seconds foyers (B₂ ; B₂, B₂') se situent sur une droite (Z₂) qui s'étend parallèlement à la direction z.

13. Dispositif de mesure suivant la revendication 12, **caractérisé en ce que** les premiers foyers (B₁, B₁') des ensembles de miroirs (4, 4') sont disposés tournés de 90° autour de la droite (Z₂).

14. Dispositif de mesure suivant une des revendications précédentes, **caractérisé en ce que** chaque ensemble de miroirs (4, 4') est associé à une unité émettrice-réceptrice (3, 3').

15. Dispositif de mesure suivant une des revendications précédentes, **caractérisé en ce que** le premier miroir (7 ; 7, 7') respectif et le second miroir (19 ; 19,19') présentent une courbure concave dans la direction z, la courbure étant notamment sélectionnée parmi le groupe constitué de parabolique, elliptique et sphérique.

16. Dispositif de mesure suivant une des revendications 1 à 14, **caractérisé en ce que** le premier miroir (7 ; 7, 7') respectif et le second miroir (19 ; 19,19') sont conçus plans dans la direction z et qu'il est prévu au moins un élément de focalisation (18) pour la focalisation du rayonnement (S) dans la direction z.

17. Procédé de mesurage d'objets à contrôler comprenant les étapes suivantes :
mise à disposition d'un dispositif de mesure (1) suivant au moins une des revendications précédentes,
disposition d'un objet à contrôler (2) de telle manière que son axe longitudinal médian (L) s'étende à travers le second foyer (B₂ ; B₂, B₂'),
émission d'un rayonnement térahertz au moyen de l'émetteur (9),
déviation du rayonnement térahertz émis (S) au moyen du troisième miroir (8 ; 8', 8), ainsi que du premier miroir (7 ; 7, 7'), et au moyen du second miroir (19 ; 19, 19') dans la direction du second foyer (B₂ ; B₂, B₂'),
réflexion du rayonnement térahertz (S) sur l'objet à contrôler (2),
déviation du rayonnement térahertz (R) au moyen du second miroir (19 ; 19,19'), ainsi que du premier miroir (7 ; 7, 7'), et du troisième miroir (8 ; 8', 8) dans la direction du récepteur (10),
détection du rayonnement térahertz (R) au moyen du récepteur (10) et
évaluation du rayonnement térahertz (R) détecté.

18. Procédé suivant la revendication 17, **caractérisé en ce que** l'objet à contrôler (2) et le troisième miroir (8 ; 8', 8) sont pivotés l'un par rapport à l'autre, notamment le troisième miroir (8 ; 8', 8) est pivoté autour de l'axe z (Z₁ ; Z₁, Z₁') s'étendant parallèlement à la direction z à travers le premier foyer (B₁ ; B₁, B₁').

19. Procédé suivant la revendication 17 ou 18, **caractérisé en ce qu'**un objet à contrôler (2) en matière artificielle est mesuré en mesurant un décalage de propagation du rayonnement térahertz qui est réfléchi sur des couches limites, en particulier sur des surfaces de l'objet à contrôler (2), par exemple sur une paroi extérieure de tube et/ou une paroi intérieure de tube et/ou sur des couches de matériau adjacentes à l'intérieur de l'objet à contrôler (2).
